# EUROPÄISCHE PATENTANMELDUNG

(11) **EP 2 241 917 A2**
(43) Veröffentlichungstag der Anmeldung: **20.10.2010**
(21) Anmeldenummer: 10405075.2
(22) Anmeldetag: 07.04.2010
(51) Int. Cl.: G02B 6/44, H02G 3/12, H02G 3/16

(54) **Unterputzdose**

(30) Priorität: 16.04.2009 CH 6042009
(71) Anmelder: Zidatech AG, 4614 Hägendorf (CH)
(72) Erfinder: Wacker, Alfred, 5707 Seengen (CH)
(74) Vertreter: Wagner, Wolfgang Heribert

(57) **Zusammenfassung**

Eine von einem Rahmen (1) umgeben Restöffnung (2) ist von einer Abdeckplatte (3) bedeckt, welche mit einem hinter dem Rahmen angeordneten Träger (10) verschraubt ist. Am Träger (10) sind Buchsen (14), an denen Adern eines Kupferkabels enden, befestigt, welche durch Anschlussöffnungen (4) in der Abdeckplatte (3) zugänglich sind. In eine Oeffnung (16) am Träger (10) ist ein mit ihm verrasteten Kupplungshalter (17) eingesetzt, der Aufnahmen (18) für Kupplungen (19) für faseroptische Verbindungen aufweist, die durch schräg nach unten gerichtete, durch Schutzkappen (20) verschliessbare weitere Anschlussöffnungen (6) in der Abdeckplatte (3) zugänglich sind. An der Rückseite des Trägers (10) ist ein Kabelhalter (21) aufgesteckt und mit dem Träger (10) verrastet, der an der Rückseite einer durchbrochenen Zwischenwand (22) einen Reseveraum für eine Kabel- und/oder Faserreserve trägt.

## Beschreibung

### Technisches Gebiet

Die Erfindung betrifft eine Unterputzdose, wie sie, vor allem in Privathaushalten, als Anschlussdosen für Telefon-, Radio-, Fernseh- und Internetverbindungen eingesetzt werden.

### Stand der Technik

Es sind gattungsgemässe Unterputzdosen bekannt, welche ausschliesslich Anschlüsse für Verbindungen aufweisen, in welchen Kupferkabel eingesetzt werden. Mehr und mehr werden jedoch für breitbandige Fernseh- und Internetanschlüsse faseroptische Verbindungen eingesetzt. Derzeit müssen diese Anschlüsse in separaten Dosen untergebracht werden.

### Darstellung der Erfindung

Der Erfindung liegt die Aufgabe zu Grunde, eine gattungsgemässe Unterputzdose derart auszugestalten, dass sie sowohl Anschlüsse für Kabelverbindungen als auch solche für faseroptische Verbindungen aufnehmen kann. Diese Aufgabe wird durch die Merkmale im Kennzeichen des Anspruchs 1 gelöst. Die erfindungsgemässe Unterputzdose sieht sowohl Buchsen für Kabelverbindungen wie auch Aufnahmen für Kupplungen für faseroptische Verbindungen vor. Auf diese Weise können auf platzsparende und einfache Weise Anschlüsse sowohl für auf Kupferkabeln beruhende Verbindungen der traditionellen analogen oder digitalen Telefonie und herkömmliches Kabelfernsehen als auch für breitbandige faseroptische Verbindungen, wie sie vor allem für hochauflösendes Fernsehen und Internet mehr und mehr eingesetzt werden, zur Verfügung gestellt werden.

### Kurze Beschreibung der Zeichnungen

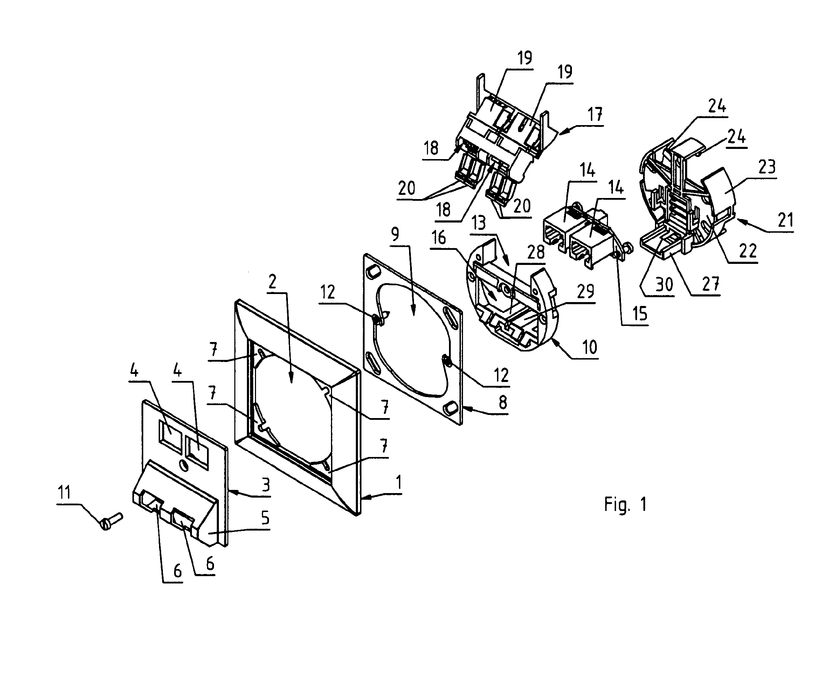

Im folgenden wird die Erfindung anhand von Figuren, welche lediglich ein Ausführungsbeispiel darstellen, näher erläutert. Es zeigen
- Fig. 1: eine Explosionsdarstellung einer erfindungsgemässen Unterputzdose,
- Fig. 2: eine Draufsicht auf die Vorderseite der Unterputzdose von Fig. 1,
- Fig. 3: eine Seitenansicht der Unterputzdose von Fig. 1, mit eingezogenen Kabeln,
- Fig. 4: eine Draufsicht auf die Rückseite der Unterputzdose von Fig. 1, mit eingezogenen Kabeln,
- Fig. 5: einen Schnitt längs V-V in Fig. 1,
- Fig. 6: eine Draufsicht auf die Rückseite eines Teils der Unterputzdose von Fig. 1,
- Fig. 7: einen Schnitt längs VII-VII in Fig. 6,
- Fig. 8: einen Schnitt längs VIII-VIII in Fig. 6 und
- Fig. 9: einen Schnitt längs IX-IX in Fig. 7.

### Wege zur Ausführung der Erfindung

Die Unterputzdose weist einen ungefähr quadratischen Rahmen 1 auf, welcher mit der Rückseite an einer Wand, an der die Unterputzdose montiert ist, anliegt, derart, dass eine dahinterliegende zylindrische Vertiefung von 50mm Durchmesser und 50mm Tiefe in der Wand vollständig verdeckt ist. Er umgibt eine Restöffnung 2, die von einer Abdeckplatte 3 bedeckt ist, welche in einer oberen Hälfte zwei nebeneinander liegende Anschlussöffnungen 4 aufweist und in einer unteren Hälfte eine Ausbuchtung 5, an welcher zwei weitere Anschlussöffnungen 6 angeordnet sind. Die Rückseite der Abdeckplatte 3 liegt an Anschlägen 7 in den Ecken der Restöffnung 2 an.

An der Rückseite des Rahmens 1 ist eine Zwischenplatte 8 angeordnet, welche die Form eines Rahmens hat, der eine grosse mittlere Durchlass 9 umgibt. Sie kann zusammen mit dem Rahmen 1 etwa mittels Dübeln an der Wand befestigt werden. Ein etwa zylindrischer Träger 10 ist mittels eines Schraubenbolzens 11 durch den Durchlass 9 hindurch mit der Abdeckplatte 3 verschraubt und mittels zweier weiterer, in Schlitze am Rand des Durchlasses 9 eingesetzter Schraubenbolzen 12 mit der Zwischenplatte 8. Die Abdeckplatte 3, die Zwischenplatte 9 und der zwischen ihnen geklemmte Rahmen 1 sind so untereinander und mit dem Träger 10 zuverlässig, aber lösbar verbunden.

Der Träger 10 weist an der Oberseite eine Ausnehmung 13 auf, in welcher zwei gerade nach vorn weisende Buchsen 14 liegen, die an der Vorderseite einer Basis 15, einer ungefähr trapezförmigen Platte, besfestigt sind, welche mit dem Träger 10 verschraubt ist. Die Buchsen 14 sind mit Adern eines Kupferkabels verbunden und bilden einen herkömmlichen Anschluss für ein Telefon, Fernsehgerät oder Modem. Durch die Anschlussöffnungen 4 können entsprechende Stecker in die Buchsen 14 eingesteckt werden. Unterhalb der Ausnehmung 13 ist eine etwa rechteckige Oeffnung 16 angordnet, in welche ein Kupplungshalter 17 eingesetzt ist. Er weist zwei nebeneinander liegende gleiche Aufnahmen 18 auf, in welche jeweils eine Kupplung 19 für eine faseroptische Verbindung oder zwei nebeneinander liegende faseroptische Verbindungen eingesetzt sind. Die Kupplungen 19 sind in einem Winkel von ca. 45° schräg nach unten gerichtet. Die Anschlussöffnungen 6 sind durch verschwenkbar am Kupplungshalter 19 festgelegte Schutzklappen 20 verschliessbar. Bei geöffneten Schutzklappen 20 können durch die Anschlussöffnungen 6 hindurch entsprechende Stecker in die Kupplungen 19 eingeführt werden. Geschlossene Schutzklappen 20 lassen genügend Raum für einen Transport-Staubschutz an der Kupplung 19. Der Kupplungshalter 17 ist mit dem Träger 10 verrastet, wie weiter unten noch näher erläutert werden wird.

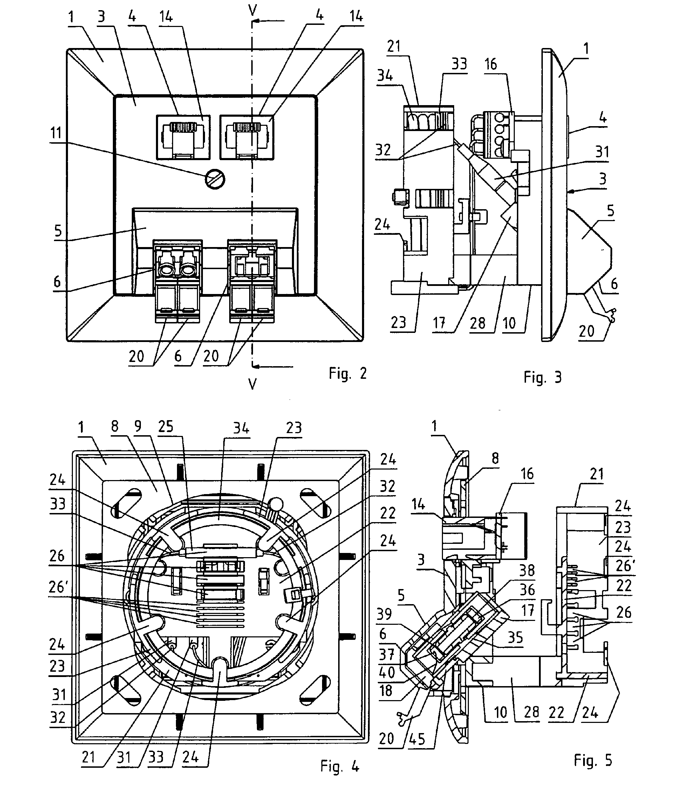

An der Rückseite des Trägers 10 ist ein Kabelhalter 21 aufgesteckt, welcher eine zum Rahmen 1 parallele, ungefähr kreisrunde Zwischenwand 22 mit mehreren Durchbrüchen aufweist, welche eine ebenfalls unterbrochene an ihren Rand anschliessende Seitenwand 23 trägt, an derem Rand von der Zwischenwand 22 beabstandete, nach innen weisende Haltevorsprünge 24 (Fig. 4) angeformt sind. Der Kabelhalter 21 bildet so einen Reserveraum zur Aufnahme einer Kabelreserve und/oder einer Faserreserve. An der Rückseite der Zwischenwand 22 sind jeweils zur Aufnahme eines Schrumpfschlauch-Spleissschutzes 25 geeignete Halterungen 26 und jeweils zur Aufnahme eines Press-Spleissschutzes geeignete Halterungen 26' angebracht. Sie sind jeweils als durchgehende Nut ausgebildet, welche jeweils zwischen zwei parallelen, von der Rückseite der Zwischenwand 22 abstehenden Stegen, die an ihren vorderen Rändern etwas verdickt sein können, gebildet wird.

Zur Befestigung am Träger 10 trägt der Kabelhalter 21 unten an seiner Vorderseite eine Kupplungslasche 27, welche in einen unten an der Rückseite des Trägers 10 angebrachten, nach hinten abstehenden Kupplungsfortsatz 28 eingeschoben ist. Ausserdem ist der Kabelhalter 21 durch einen zum Kupplungsfortsatz 28 parallelen, nach oben elastisch ausbiegbaren Kupplungshaken 29 am Träger 10, der eine waagrechte Querkante 30 an der Kupplungslasche 27 übergreift, mit dem Träger 10 verrastet.

Als Beispiel für eine Kupplung 19 ist (Fig. 2) links eine Duplex-Kupplung und rechts eine einfache Kupplung (Fig. 5) dargestellt, mit einer Steckeraufnahme an der Innenseite und an der der Anschlussöffnung 6 zugewandten Aussenseite, in die jeweils Stecker 31 (Fig. 3) einsteckbar sind. An die Stecker 31 an der Innenseite schliesst jeweils eine Ader 32, eine ummantelte Glasfaser, an, welche in einer Windung oder mehreren Windungen im Reserveraum des Kabelhalters 21 an der Innenseite der Seitenwand 23 entlangläuft, wobei sie ausserdem von den Haltevorsprüngen 7 festgehalten wird. Sie kann mit einer weiteren Ader 33, ebenfalls einer ummantelten Glasfaser, eines Kabels 34 verspleisst sein. Der Spleiss ist im Beispiel vom Schrumpfschlauch-Spleissschutz 25 umgeben und in einer der Halterungen 26 fixiert. Die Ader 33 und das anschliessende Kabel 34, das aus der Wand in die die Unterputzdose aufnehmende Vertiefung mündet und aus dem die Ader 33 hervorgeht, bilden ebenfalls eine jeweils aus mehreren Windungen bestehende Faser- bzw. Kabelreserve im Reserveraum des Kabelhalters 21. Eine Ader 33 aus dem Kabel 34 kann jedoch auch selbst einen Stecker 31 tragen. Auch in diesem Fall kann die Ader 33 eine Faserreserve im Reserveraum bilden.

Die einfache Kupplung 19 weist (Fig. 5) eine Hülse 35 auf mit einer inneren Einstecköffnung 36 für die Aufnahme eines Steckers 31 (Fig. 3), in dem die letztlich vom Kabel 34 herkommende Ader 32 endet und einer äusseren Einstecköffnung 37 für die Aufnahme eines (nicht dargestellten) Steckers zur Herstellung einer optischen Verbindung der Ader 32 mit einem Modem oder einem anderen Gerät. Am Grund der inneren Einstecköffnung 36 ist eine Eintrittsöffnung 38 eines Kopplers angeordnet und am Grund der äusseren Einstecköffnung 37 eine Austrittsöffnung 39 desselben. Vor der Austrittsöffnung 39 ist ein elastisches Schutzplättchen 40, z.B. aus Blech, an der Hülse 35 befestigt, und zwar im Randbereich der Einstecköffnung 37 schräg gegen die Austrittsöffnung 39 vorragend und diese verdeckend. Wird ein Stecker in die Einstecköffnung 37 geschoben, so übt derselbe eine gegen die Austrittsöffnung 39 gerichtete Kraft auf das Schutzplättchen 40 aus, welches daraufhin unter elastischer Deformation ausweicht. Wird der Stecker wieder herausgezogen, so nimmt das Schutzplättchen 40 wieder seine ursprüngliche Position an und verdeckt die Austrittsöffnung 39. So wird eine Gefährdung vor allem von Kindern verhindert, die versucht sein können, eine der Schutzklappen 20 zu öffnen und aus nächster Nähe in die Einstecköffnung 37 zu schauen. Bei einer Duplex-Kupplung, welche zwei nebeneinander in der Hülse angeordnete Koppler aufweist, werden vorzugsweise zwei Schutzplättchen vorgesehen, eines für jede der zwei nebeneinander liegenden Einstecköffnungen.

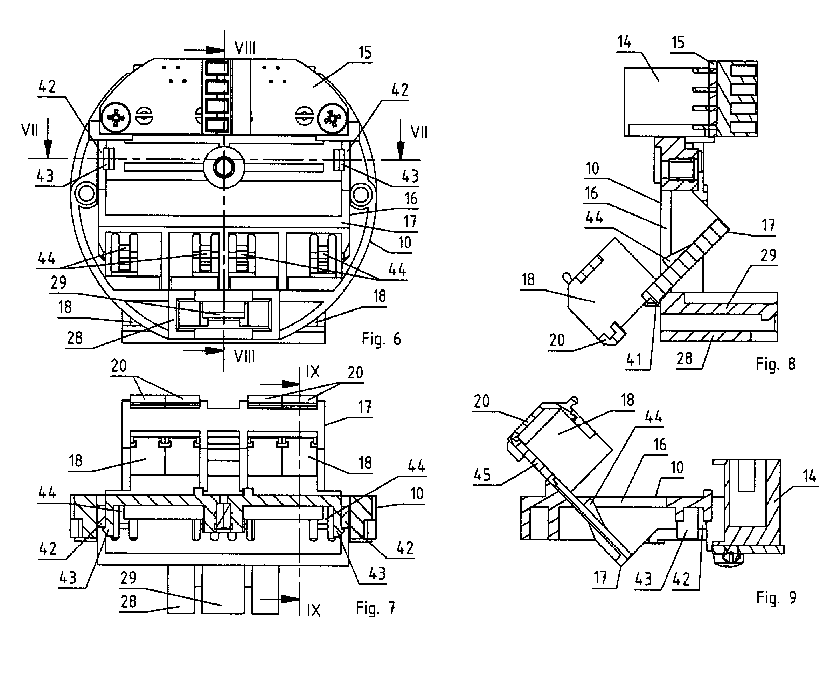

Wie bereits erwähnt ist der Kupplungshalter 17 mit dem Träger 10 verrastet. Dies ist am besten aus den Figuren 6 bis 9 ersichtlich, in denen lediglich diese beiden Teile sowie die Buchsen 14 mit der sie tragenden Basis 15 dargestellt sind. Der Kupplungshalter 17 weist an der Unterseite mehrere mit Abstand nebeneinander angeordnete Rastnocken 41 auf, welche jeweils einen Abschnitt des unteren Randes der Oeffnung 16 im Träger 10 übergreifen. Ausserdem trägt er beidseits jeweils einen nach oben abstehenden Raststeg 42, der von einem elastisch seitlich ausbiegbaren Rasthaken 43 am Träger 10 übergriffen wird. Nach Ausbiegen der Rasthaken 43 zur Mitte hin kann der Kupplungshalter 17 nach hinten gekippt und leicht angehoben und dann rückwärts aus der Oeffnung 16 gezogen werden.

Zum Verriegeln der Kupplungen 19 in den Aufnahmen 18 sind am Kupplungshalter 17 Schnapper 44 vorgesehen, nach vorn weisende, elastisch nach unten ausbiegbare Stege, deren Enden in einer Grundstellung nach oben überstehende Verriegelungsflächen bilden, welche auf die Rückseiten seitlich abstehender Flansche an den Kupplungen 19 einwirken. Beim Einführen einer Kupplung 19 weichen sie nach unten aus und schnappen in ihre Grundstellung zurück, sobald die Kupplung 19 vollständig eingeführt ist.

Die Schutzklappen 20 sind jeweils Teile separater Schutzvorrichtungen, die am Kupplungshalter 17 verankert sind. Jede Schutzvorrichtung weist ausser der Schutzklappe 20 auch eine Grundplatte 45 auf, welche in die Aufnahme 18 eingelegt ist, derart, dass sie einen Boden derselben bildet und nach dem Einführen der Kupplung 19 in einer definierten Position festgehalten ist. Der untere Rand der Schutzklappe 20 ist mit dem vorderen Rand der Grundplatte 45 über ein Filmscharnier verbunden. Im geschlossenen Zustand der Schutzklappe 20 ist ihr oberer Rand mit dem Kupplungshalter 17 schnappverriegelt.

Der Rahmen 1, die Abdeckplatte 3, der Träger 10, der Kupplungshalter 17 und der Kabelhalter 21 und die Schutzvorrichtungen sind jeweils Spritzgussteile. Die Zwischenplatte 8 besteht aus Metall, z.B. Aluminium, und ist ein einfaches Stanzteil. Durch die Aufteilung in eine Anzahl separater Teile ist die Herstellung der Unterputzdose verhältnismässig einfach. Insbesondere sind keine komplizierten Spritzgussformen erforderlich.

### Bezugszeichenliste

- 1: Rahmen
- 2: Restöffnung
- 3: Abdeckplatte
- 4: Anschlussöffnung
- 5: Vorsprung
- 6: Anschlussöffnung
- 7: Anschlag
- 8: Zwischenplatte
- 9: Durchlass
- 10: Träger
- 11: Schraubenbolzen
- 12: Schraubenbolzen
- 13: Ausnehmung
- 14: Buchse
- 15: Basis
- 16: Oeffnung
- 17: Kupplungshalter
- 18: Aufnahme
- 19: Kupplung
- 20: Schutzklappe
- 21: Kabelhalter
- 22: Zwischenwand
- 23: Seitenwand
- 24: Haltevorsprung
- 25: Schrumpfschlauch-Spleissschutz
- 26, 26': Halterung
- 27: Kupplungslasche
- 28: Kupplungsfortsatz
- 29: Kupplungshaken
- 30: Querkante
- 31: Stecker
- 32: Ader
- 33: Ader
- 34: Kabel
- 35: Hülse
- 36, 37: Einstecköffnungen
- 38: Einlassöffnung
- 39: Auslassöffnung
- 40: Schutzplättchen
- 41: Rastnocken
- 42: Raststeg
- 43: Rasthaken
- 44: Schnapper
- 45: Grundplatte

## Patentansprüche

1. Unterputzdose mit einem eine Restöffnung (2) umgebenden Rahmen (1) sowie einer in den Rahmen (1) eingesetzten, die Restöffnung (2) bedeckenden Abdeckplatte (3), die mindestens eine Anschlussöffnung (4) aufweist, an welche mindestens eine Buchse (14) einer Kabelverbindung anschliesst, **dadurch gekennzeichnet, dass** an der Rückseite der Abdeckplatte (3) ein Kupplungshalter (17) angeordnet ist mit mindestens einer Aufnahme (18) für mindestens eine Kupplung (19) einer faseroptischen Verbindung und die Abdeckplatte (3) mindestens eine weitere Anschlussöffnung (6) aufweist, an welche die mindestens eine Aufnahme (18) anschliesst.

2. Unterputzdose nach Anspruch 1, **dadurch gekennzeichnet, dass** die mindestens eine Buchse (14) gerade nach aussen gerichtet ist und der Kupplungshalter (17) unterhalb derselben angeordnet ist, derart, dass die mindestens eine Aufnahme (18) schräg nach unten gerichtet ist.

3. Unterputzdose nach Anspruch 1 oder 2, **dadurch gekennzeichnet, dass** sie einen mit der Abdeckplatte (3) lösbar verbundenen Träger (10) umfasst, an welchem die mindestens eine Buchse (14) und der Kupplungshalter (17) jeweils lösbar befestigt sind.

4. Unterputzdose nach Anspruch 3, **dadurch gekennzeichnet, dass** der Kupplungshalter (17) mit dem Träger (10) verrastet ist.

5. Unterputzdose nach Anspruch 4, **dadurch gekennzeichnet, dass** der Träger (10) eine Oeffnung (16) aufweist sowie mindestens einen nach hinten abstehenden elastisch ausbiegbaren Rasthaken (43) und der Kupplungshalter (17) mindestens einen einen Randabschnitt der Oeffnung (16) übergreifenden Rastnocken (41) aufweist und einen am Träger (10) anliegenden Raststeg (42), den der Rasthaken (43) übergreift.

6. Unterputzdose nach einem der Ansprüche 1 bis 5, **dadurch gekennzeichnet, dass** die mindestens eine Aufnahme (18) mindestens einen elastisch ausbiegbaren Schnapper (44) aufweist mit einer gegen die Anschlussöffnung (6) weisenden Verriegelungsfläche zum Festhalten einer Kupplung (19).

7. Unterputzdose nach einem der Ansprüche 1 bis 6, **dadurch gekennzeichnet, dass** an der mindestens einen Aufnahme (18) jeweils mindestens eine Schutzklappe (20) angeordnet ist, welche aus einer geschlossenen Position, in der sie die mindestens eine Anschlussöffnung (6) wenigstens teilweise verschliesst, nach aussen schwenkbar ist.

8. Unterputzdose nach Anspruch 7, **dadurch gekennzeichnet, dass** die Schutzklappe (20) in der geschlossenen Position schnappverriegelt ist.

9. Unterputzdose nach Anspruch 7 oder 8, **dadurch gekennzeichnet, dass** die Schutzklappe (20) Teil einer separaten Schutzvorrichtung ist mit einer in der Aufnahme (18) angeordneten Grundplatte (45), mit der die Schutzklappe (20) über ein Filmscharnier verbunden ist.

10. Unterputzdose nach einem der Ansprüche 1 bis 9, **dadurch gekennzeichnet, dass** die mindestens eine Buchse (14) an einer Basis (15) befestigt ist, welche mit dem Träger (10) lösbar verbunden ist.

11. Unterputzdose nach einem der Ansprüche 1 bis 10,
**dadurch gekennzeichnet, dass** sie einen hinter dem Träger (10) angeordneten, lösbar an demselben befestigten Kabelhalter (21) aufweist, mit einer durchbrochenen Zwischenwand (22) und einer an ihren Rand anschliessenden Seitenwand (23).

12. Unterputzdose nach Anspruch 11, **dadurch gekennzeichnet, dass** der Kabelhalter (21) auf den Träger (10) aufgesteckt und mit ihm verrastet ist.

13. Unterputzdose nach Anspruch 11 oder 12, **dadurch gekennzeichnet, dass** die Seitenwand (23) von der Zwischenwand (22) beabstandete Haltevorsprünge (24) zur Fixierung einer Kabelreserve oder Faserreserve aufweist.

14. Unterputzdose nach einem der Ansprüche 11 bis 13,
**dadurch gekennzeichnet, dass** die Zwischenwand (22) mindestens eine zur Aufnahme eines Spleissschutzes geeignete Halterung (26, 26') aufweist.

15. Unterputzdose nach Anspruch 14, **dadurch gekennzeichnet, dass** sie mindestens zwei Halterungen (26; 26') aufweist, von denen mindestens eine zur Aufnahme eines Schrumpfschlauch-Spleissschutzes (25) und mindestens eine zur Aufnahme eines Press-Spleissschutzes geeignet ist.

16. Unterputzdose nach einem der Ansprüche 1 bis 15,
**dadurch gekennzeichnet, dass** sie ausserdem eine in der mindestens einen Aufnahme (18) des Kupplungshalters (17) angeordnete Kupplung (19) mit mindestens einer zum Einführen eines Steckers geeigneten Einstecköffnung (37), an deren Grund eine Austrittsöffnung (39) liegt, aufweist sowie ein die Austrittsöffnung (39) verdeckendes Schutzplättchen (40), das derart angebracht und ausgebildet ist, dass es bei Einwirkung einer gegen die Austrittsöffnung (39) gerichteten Kraft, wie sie beim Einführen eines Steckers auf dasselbe einwirkt, federnd ausweicht und die Austrittsöffnung (39) freigibt.
